# EUROPEAN PATENT SPECIFICATION

(11) **EP 3 120 131 B1**
(45) Date of publication and mention of the grant of the patent: **10.01.2018**
(21) Application number: 15712737.4
(22) Date of filing: 10.03.2015
(51) Int. Cl.: G01N 17/02

(54) **CORROSION SENSOR FOR HEAT EXCHANGERS**
KORROSIONSSENSOR FÜR WÄRMETAUSCHER
CAPTEUR DE CORROSION POUR ÉCHANGEURS DE CHALEUR

(30) Priority: 18.03.2014 US 201461954891 P
(43) Date of publication of application: 25.01.2017
(73) Proprietor: Carrier Corporation, Farmington, CT 06034 (US)
(72) Inventor: DING, Hongbo, Syracuse, New York 13221 (US)
(74) Representative: Schmitt-Nilson Schraud Waibel Wohlfrom Patentanwälte Partnerschaft mbB
(86) International application number: PCT/US2015/019645
(87) International publication number: WO 2015/142569

(56) References cited:
- CA-A1- 1 143 012
- US-A1- 2005 045 483
- PORTLAND CEMENT ASSOCIATION: "Types and Causes of Concrete Deterioration", PORTLAND CEMENT ASSOCIATION R&D, CONCRETE INFORMATION, vol. R&D, no. 2617, 1 January 2002 (2002-01-01), pages 1-16, XP002741546,

## Description

### BACKGROUND

Corrosion can cause a leaking of heat exchangers (HXs) in heating, ventilation, and air conditioning (HVAC) systems. A sensor device that can detect the corrosive environment of the HXs is critical for maintenance and for development of new HXs. Conventional sensors are not designed for HXs and are therefore not able to correctly sense the HXs' corrosive environment. For example, wire-on-bolt sensors used for characterizing corrosive environments are not able to give the critical information associated with leaking (i.e., pitting corrosion of HXs) but just provide the general corrosivity of the environment. In addition, some commercial sensors are expensive due to their utilization of sophisticated electronics.

A leaking of HX coil can cause an HVAC system to become inoperative. In the context of container evaporators, the main cause of leaking may be due to corrosion of one or more tubes. The issue may be even more pronounced for tubes incorporating some materials (e.g., aluminum) relative to other materials (e.g., copper). If the HX leaks, cargo located in an environment controlled by the HX can be compromised or subject to spoliation.

CA 1 143 0012 A1 discloses a device for the monitoring of corrosion, for example, of heat exchanger tubes, consisting of one or several test tubes which are attached at an easily accessible point. These test tubes are made of the same material as the heat exchanger tubes to be measured. For the purpose of monitoring localized corrosion, a reference electrode and a millivoltmeter are attached to the test tube.

US 2005/045483 A1 describes a method of producing the sensors for monitoring corrosion of heat exchanger tubes in a thermal power plant. The sensor is made of the tubes taken out from actual heat-exchanger.

### BRIEF SUMMARY

In accordance with the present invention, a method for detecting corrosion in heat exchangers is described comprising: installing a first tube made of a first material on a heat exchanger that is different from a second material associated with a second tube of the heat exchanger, wherein the first tube is coupled to the second tube via a porous layer associated with the first tube, measuring a signal between the first tube and the second tube, logging the measured signal as data, and obtaining information associated with a corrosiveness of an environment in which the heat exchanger is located based on the data.

The present invention is furthermore directed to a corrosion sensor system according to claim 9.

Additional embodiments are described below.

### BRIEF DESCRIPTION OF THE DRAWINGS

The present disclosure is illustrated by way of example and not limited in the accompanying figures in which like reference numerals indicate similar elements.
FIG. 1 is a block diagram of a system incorporating a heat exchanger in accordance with one or more embodiments;
FIG. 2 illustrates a chart demonstrating a measurement of a potential difference between materials in accordance with one or more embodiments;
FIG. 3 is a plot of voltage versus time for a specimen inserted into a corrosion chamber in accordance with one or more embodiments; and
FIG. 4 is a flow chart of an exemplary method in accordance with one or more embodiments.

### DETAILED DESCRIPTION

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.

A section of a het exchanger (HX) coil may be used as a sensor unit. By doing so, the sensor is able to provide specific information regarding the actual HX, such as time-of-wetness at the coil tube surfaces (e.g., tube/fin interface). The pitting corrosion of the tubes (leaking threat) may be monitored and correlated to the sensor signal, which may be a current or voltage. The sensor signal may be recorded simply through a cheap and re-usable data logger.

In some embodiments, a sensor may be a unit that is independent of a HX. The sensor may be fabricated by sectioning a small unit from an actual HX coil.

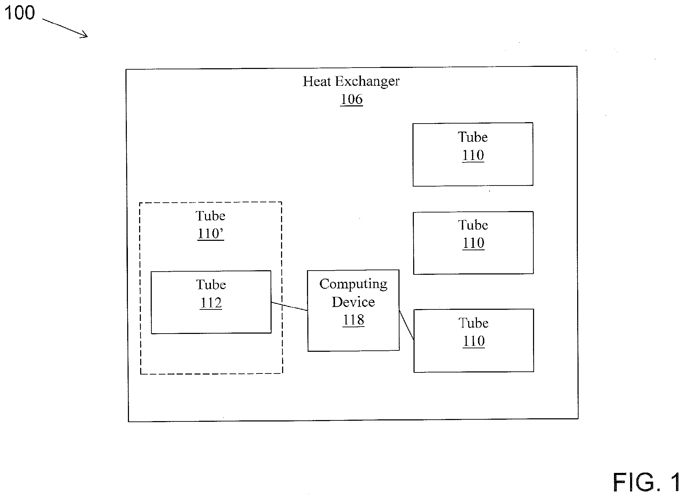

Referring to FIG. 1, a system 100 is shown. The system 100 may include a HX 106. The HX 106 may include a number of tubes 110 and fins (not shown) as would be known to one of skill in the art. The tubes 110 and fins may be made of one or more materials, such as aluminum.

In order to provide for a corrosion detection sensor, one of the tubes 110 may be removed from the HX 106. As an example, a tube 110' may be removed from the HX 106. In place of the tube 110', a tube 112 may be installed or inserted in the HX 106.

According to the invention the tube (112) is of a different material than the tubes 110 or the structure of the HX 106. In an embodiment, the tube 112 may be made of copper. The exterior of the tube 112 include a porous layer that may serve as an insulator. The porous layer may correspond to a commercially available coating.

The material for the tube 112 is selected to be different from that of the tubes 110 or the structure of the HX 106 in order to provide for a large, measurable (galvanic) potential difference. When the HX 106 is subject to corrosion, a signal is measured or detected. For example, a measurable output voltage in an amount greater than a threshold may exist between the tube 112 and the tube 110 or the structure of the HX 106. Similarly, when the HX 106 is not subject to corrosion, the measured output voltage signal may be less than the threshold.

A computing device 118 is shown in FIG. 1. The computing device 118 may couple the tube 112 and one or more of the tubes 110. The computing device 118 performs measurements and logs data as described further below. While shown in FIG. 1 as being included with the HX 106, in some embodiments the computing device 118 may reside separately from the HX 106.

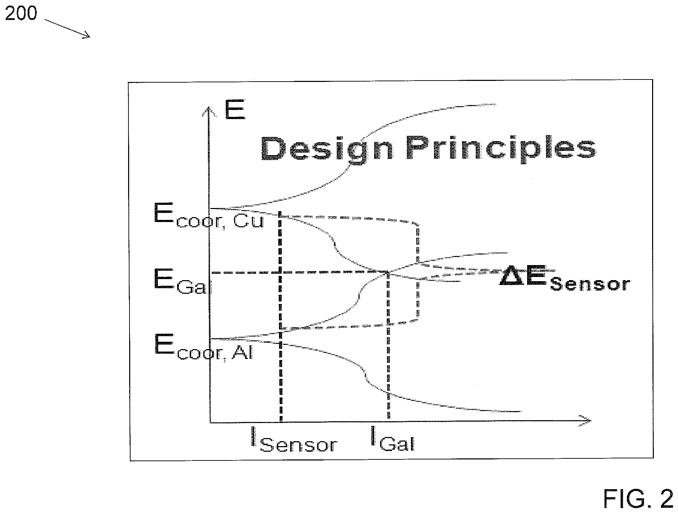

Referring to FIG. 2, a chart 200 is shown. The chart 200 plots voltage or potential on the vertical axis versus current on the horizontal axis. On the vertical axis, three points of potential are shown. A first point, denoted as E_{coor,Cu}, corresponds to a corrosion potential of copper. A second point, denoted as E_{Gal}, corresponds to a galvanic potential. The third point, denoted as E_{coor,Al}, corresponds to the a corrosion potential of aluminum. Similarly, on the horizontal axis, two points of current are shown. A first point, denoted as I_{Gal}, corresponds to a current at the galvanic potential E_{Gal}. A second point, denoted as ISensor, corresponds to a current associated with the sensor established by the use of the two different materials (copper and aluminum in this example).

If the different materials (e.g., copper and aluminum) were placed in direct contact with one another, a short circuit would develop and no potential difference would exist between the materials. This would render the measurement of E_{Gal} difficult. However, as described above in connection with FIG. 1, when a porous layer or material is used between the different materials, the porous material may serve as an insulator allowing a potential difference to be established and measured. This potential difference is denoted in FIG. 2 as ΔEₛₑₙₛₒᵣ. The measurement associated with ΔEₛₑₙₛₒᵣ can be analogized to measuring an output voltage of a battery.

While the example described above in connection with FIG. 2 related to voltage, one skilled in the art would appreciate that other parameters (e.g., current, power, energy, etc.) could be measured or monitored for purposes of sensing or detecting corrosion.

Referring back to FIG. 1, the effectiveness of the sensor created via the tubing 112 and porous layer may be analyzed by placing the sensor, or at least a portion of the HX 106, in a corrosion chamber as a specimen. The corrosion chamber may apply a salted solution to the specimen. The corrosion chamber may continuously apply the salted solution in a continuously-wet mode of operation. Alternatively, the corrosion chamber may alternate between not applying and applying the salted solution in what may be referred to as dry and wet cycles of operation, respectively. A corrosion chamber that operates using dry and wet cycles may be referred to as a cyclic corrosion chamber.

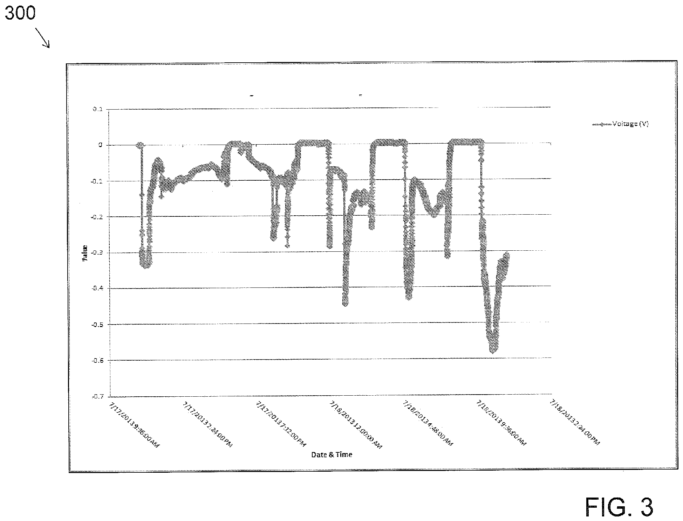

Referring to FIG. 3, a plot 300 of voltage on the vertical axis versus time on the horizontal axis for an exemplary specimen inserted into a cyclic corrosion chamber is shown. Points in time corresponding to when the voltage is equal to, or approximately equal to, zero may correspond to the dry cycles of operation. Similarly, large values in terms of the magnitude of the voltage may correspond to the wet cycles of operation.

In some instances, such as when the sensor or HX 106 has been deployed in the field, it may be desirable to obtain an understanding of the environment in which the HX 106 was operating. In order to make such a determination, the sensor (or a portion thereof) may be placed in de-ionized water. Placement in the water may serve to extract any chemicals on the surface of the sensor to the water. Thereafter, a chemical analysis may be performed on the water to characterize the environment in which the sensor/HX 106 was located.

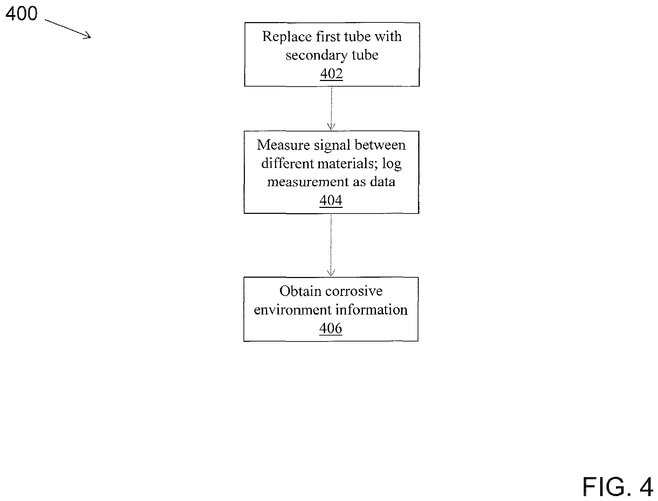

Turning now to FIG. 4, a flow chart of a method 400 is shown. The method 400 may be operative in connection with one or more environments, systems, devices, or components, such as those described herein. The method 400 may be used to design and use a corrosion sensor for a HX.

In block 402, a first tube associated with a HX may be replaced by, or substituted with, a secondary tube. In this respect, the secondary tube may be installed on the HX. The secondary tube may be made of a material that is different from the first tube or other tubes of the HX. For example, the secondary tube may be made of copper, whereas the first tube or the other tubes may be made of aluminum.

In block 404, a measurement of a signal, such as a galvanic voltage or current differential between the two different materials or metals may be made. The measurement of the signal may be logged as data using a computing or logging device, such as a Volta data logger or a zero-resistance ammeter. In some embodiments, the measured signal may be converted to digital data for storage using an analog-to-digital converter.

In block 406, corrosive environment information associated with the HX may be obtained based on the logged data of block 404.

In some embodiments, one or more of the blocks or operations (or a portion thereof) of the method 400 may be optional. In some embodiments, the blocks may execute in an order or sequence different from what is shown in FIG. 4. In some embodiments, one or more additional blocks or operations not shown may be included.

Different data points or data sets associated with a sensor to detect and characterize a degree of corrosion associated with a HX may be utilised. For example, the disclosure may be used to efficiently, cheaply, and accurately determine a threat of leakage that a coil of a HX is subjected to. Embodiments of the disclosure may be implemented in a cost-effective manner while being specific to HX coils and while providing an ability to detect a corrosion condition at a location of concern, e.g., a tube surface. Aspects of the disclosure may be used to assure product safety and availability.

Aspects of the disclosure may be applied in connection with one or more applications, such as HVAC applications, refrigeration applications, aerospace applications, automobile applications, military applications, etc.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein.

## Claims

1. A method of detecting corrosion of a heat exchanger comprising:
installing a first tube (112) made of a first material on a heat exchanger (106) that is different from a second material associated with a second tube (110) of the heat exchanger (106), wherein the first tube is coupled to the second tube via a porous layer associated with the exterior of the first tube (112);
measuring a signal between the first tube and the second tube;
logging the measured signal as data; and
obtaining information associated with the corrosiveness of an environment in which the heat exchanger (106) is located based on the data.

2. The method of claim 1, wherein the first tube is made of copper, and wherein the second tube is made of aluminum.

3. The method of claim 1, wherein the measured signal comprises a voltage.

4. The method of claim 1, wherein the measured signal comprises a current.

5. The method of claim 1, further comprising:
applying the measured signal to an analog-to-digital converter to obtain the data.

6. The method of claim 1, wherein the first tube coupled to the second tube via the porous layer forms a sensor, the method further comprising:
applying a salted solution to the sensor via a corrosion chamber,
wherein the measurement of the signal occurs when the sensor is in the corrosion chamber.

7. The method of claim 6, wherein the corrosion chamber is a cyclic corrosion chamber.

8. The method of claim 1, wherein the first tube coupled to the second tube via the porous layer forms a sensor, the method further comprising:
placing the sensor in de-ionized water to extract one or more chemicals on the surface of the sensor to the water; and
performing a chemical analysis on the water,
wherein the information associated with the corrosiveness of the environment in which the heat exchanger (106) is located is based on the chemical analysis.

9. A corrosion sensor system (100) comprising a heat exchanger (106) with a number of tubes (110) and fins; including
a first tube (112) made of a first material;
a second tube (110) made of a second material that is different from the first material; and
a porous layer associated with the exterior of the first tube (112) and configured to couple the first tube (112) and the second tube (110); and
comprising a computing device (118) configured
to measure a signal between the first tube (112) and the second tube (110);
to log the measured signal as data; and
to obtain information associated with the corrosiveness of an environment in which the heat exchanger (106) is located based on the data.

10. The system (100) of claim 9, wherein the first tube is made of copper, and wherein the second tube is made of aluminum.

11. The system (100) of claim 9 or 10, wherein the system (100) is configured to enable a measurement of galvanic voltage to be taken.

12. The system (100) of any of claims 9 to 11, wherein the system (100) is configured to enable a measurement of differential current.

13. The system (100) of any of claims 9 to 12, wherein the first tube, the second tube and the porous layer are located in a corrosion chamber when the measurement is taken.

14. The system (100) of claim 13, wherein the corrosion chamber is a cyclic corrosion chamber, and wherein the system (100) is configured to enable the measurements to be taken during wet and dry cycles of the corrosion chamber.

15. The system (100) of any of claims 9 to 14, wherein the first tube, the second tube and the porous layer are located in de-ionized water to enable information associated with a corrosiveness of an environment in which the sensor is located to be determined.

## Patentansprüche

1. Verfahren zum Erkennen von Korrosion eines Wärmetauschers, umfassend:
Montieren eines ersten Rohrs (112) an einem Wärmetauscher (106), das aus einem ersten Material besteht, das sich von einem zweiten Material unterscheidet, das einem zweiten Rohr (110) des Wärmetauschers (106) zugeordnet ist, wobei das erste Rohr an das zweite Rohr über eine poröse Schicht gekoppelt ist, die der Außenseite des ersten Rohrs (112) zugeordnet ist;
Messen eines Signals zwischen dem ersten Rohr und dem zweiten Rohr;
Erfassen des gemessenen Signals als Daten; und
Erlangen von Informationen, die der Korrosivität einer Umgebung, in der sich der Wärmetauscher (106) befindet, zugeordnet sind, basierend auf den Daten.

2. Verfahren nach Anspruch 1, wobei das erste Rohr aus Kupfer hergestellt ist und wobei das zweite Rohr aus Aluminium hergestellt ist.

3. Verfahren nach Anspruch 1, wobei das gemessene Signal eine Spannung umfasst.

4. Verfahren nach Anspruch 1, wobei das gemessene Signal einen Strom umfasst.

5. Verfahren nach Anspruch 1, ferner umfassend:
Anwenden des gemessenen Signals auf einen Analog-DigitalWandler, um die Daten zu erlangen.

6. Verfahren nach Anspruch 1, wobei das erste Rohr, das an das zweite Rohr über die poröse Schicht gekoppelt ist, einen Sensor bildet, wobei das Verfahren ferner Folgendes umfasst:
Aufbringen einer gesalzenen Lösung auf den Sensor über eine Korrosionskammer, wobei die Messung des Signals erfolgt, wenn sich der Sensor in der Korrosionskammer befindet.

7. Verfahren nach Anspruch 6, wobei es sich bei der Korrosionskammer um eine zyklische Korrosionskammer handelt.

8. Verfahren nach Anspruch 1, wobei das erste Rohr, das über die poröse Schicht an das zweite Rohr gekoppelt ist, einen Sensor bildet, wobei das Verfahren ferner Folgendes umfasst:
Platzieren des Sensors in entionisiertem Wasser, um eine oder mehrere Chemikalien auf der Oberfläche des Sensors in das Wasser zu extrahieren; und
Durchführen einer chemischen Analyse des Wassers, wobei die Informationen, die der Korrosivität der Umgebung zugeordnet sind, in der sich der Wärmetauscher (106) befindet, auf der chemischen Analyse basieren.

9. Korrosionssensorsystem (100), das einen Wärmetauscher (106) mit einer Anzahl von Rohren (110) und Rippen umfasst; beinhaltend
ein erstes Rohr (112), das aus einem ersten Material besteht;
ein zweites Rohr (110), das aus einem zweiten Material besteht, das sich vom ersten Material unterscheidet; und
eine poröse Schicht, die der Außenseite der ersten Rohrs (112) zugeordnet ist und konfiguriert ist, das erste Rohr (112) und das zweite Rohr (110) zu koppeln; und
umfassend eine Recheneinrichtung (118), die konfiguriert ist,
ein Signal zwischen dem ersten Rohr (112) und dem zweiten Rohr (110) zu messen;
das gemessene Signal als Daten zu erfassen; und
Informationen zu erlangen, die der Korrosivität einer Umgebung zugeordnet sind, in der sich der Wärmetauscher (106) befindet, basierend auf den Daten.

10. System (100) nach Anspruch 9, wobei das erste Rohr aus Kupfer hergestellt ist und wobei das zweite Rohr aus Aluminium hergestellt ist.

11. System (100) nach Anspruch 9 oder 10, wobei das System (100) konfiguriert ist, es zu ermöglichen, dass eine Messung von galvanischer Spannung durchgeführt wird.

12. System (100) nach einem der Ansprüche 9 bis 11, wobei das System (100) konfiguriert ist, eine Messung von Differenzstrom zu ermöglichen.

13. System (100) nach einem der Ansprüche 9 bis 12, wobei sich das erste Rohr, das zweite Rohr und die poröse Schicht in einer Korrosionskammer befinden, wenn die Messung erfolgt.

14. System (100) nach Anspruch 13, wobei es sich bei der Korrosionskammer um eine zyklische Korrosionskammer handelt und wobei das System (100) konfiguriert ist, es zu ermöglichen, dass die Messungen während nasser und trockener Zyklen der Korrosionskammer durchgeführt werden.

15. System (100) nach einem der Ansprüche 9 bis 14, wobei sich das erste Rohr, das zweite Rohr und die poröse Schicht in entionisiertem Wasser befinden, um das Bestimmen von Informationen zu ermöglichen, die einer Korrosivität einer Umgebung, in der sich der Sensor befindet, zugeordnet sind.

## Revendications

1. Procédé de détection de corrosion d'un échangeur de chaleur comprenant :
l'installation d'un premier tube (112) constitué d'un premier matériau sur un échangeur de chaleur (106) qui est différent d'un second matériau associé à un second tube (110) de l'échangeur de chaleur (106),
dans lequel le premier tube est couplé au second tube par l'intermédiaire d'une couche poreuse associée à l'extérieur du premier tube (112) ;
la mesure d'un signal entre le premier tube et le second tube ;
l'enregistrement du signal mesuré en tant que données ; et
l'obtention d'informations associées à la corrosivité d'un environnement dans lequel l'échangeur de chaleur (106) est situé sur la base des données.

2. Procédé selon la revendication 1, dans lequel le premier tube est constitué de cuivre, et dans lequel le second tube est constitué d'aluminium.

3. Procédé selon la revendication 1, dans lequel le signal mesuré comprend une tension.

4. Procédé selon la revendication 1, dans lequel le signal mesuré comprend un courant.

5. Procédé selon la revendication 1, comprenant en outre :
l'application du signal mesuré à un convertisseur analogique-numérique pour obtenir les données.

6. Procédé selon la revendication 1, dans lequel le premier tube couplé au second tube par l'intermédiaire de la couche poreuse forme un capteur, le procédé comprenant en outre :
l'application d'une solution salée sur le capteur par l'intermédiaire d'une chambre de corrosion,
dans lequel la mesure du signal se produit lorsque le capteur est situé dans la chambre de corrosion.

7. Procédé selon la revendication 6, dans lequel la chambre de corrosion est une chambre de corrosion cyclique.

8. Procédé selon la revendication 1, dans lequel le premier tube couplé au second tube par l'intermédiaire de la couche poreuse forme un capteur, le procédé comprenant en outre :
le placement du capteur dans de l'eau déionisée pour extraire un ou plusieurs produits chimiques sur la surface du capteur dans l'eau ; et
la réalisation d'une analyse chimique sur l'eau,
dans lequel les informations associées à la corrosivité de l'environnement dans lequel l'échangeur de chaleur (106) est situé sont basées sur l'analyse chimique.

9. Système de capteur de corrosion (100) comprenant un échangeur de chaleur (106) avec un certain nombre de tubes (110) et d'ailettes ; comprenant
un premier tube (112) constitué d'un premier matériau ;
un second tube (110) constitué d'un second matériau qui est différent du premier matériau ; et
une couche poreuse associée à l'extérieur du premier tube (112) et configurée pour coupler le premier tube (112) et le second tube (110) ; et
comprenant un dispositif informatique (118) configuré
pour mesurer un signal entre le premier tube (112) et le second tube (110) ;
pour enregistrer le signal mesuré en tant que données ; et
pour obtenir des informations associées à la corrosivité d'un environnement dans lequel l'échangeur de chaleur (106) est situé sur la base des données.

10. Système (100) selon la revendication 9, dans lequel le premier tube est constitué de cuivre, et dans lequel le second tube est constitué d'aluminium.

11. Système (100) selon la revendication 9 ou 10, dans lequel le système (100) est configuré pour permettre la prise d'une mesure de tension galvanique.

12. Système (100) selon l'une quelconque des revendications 9 à 11, dans lequel le système (100) est configuré pour permettre une mesure de courant différentiel.

13. Système (100) selon l'une quelconque des revendications 9 à 12, dans lequel le premier tube, le second tube et la couche poreuse sont situés dans une chambre de corrosion lorsque la mesure est prise.

14. Système (100) selon la revendication 13, dans lequel la chambre de corrosion est une chambre de corrosion cyclique, et dans lequel le système (100) est configuré pour permettre la prise des mesures au cours de cycles humides et secs de la chambre de corrosion.

15. Système (100) selon l'une quelconque des revendications 9 à 14, dans lequel le premier tube, le second tube et la couche poreuse sont situés dans de l'eau déionisée pour permettre de déterminer des informations associées à une corrosivité d'un environnement dans lequel le capteur est situé.
